# EUROPEAN PATENT SPECIFICATION

(11) **EP 0 812 808 B1**
(45) Date of publication and mention of the grant of the patent: **27.08.2003**
(21) Application number: 97610023.0
(22) Date of filing: 11.06.1997
(51) Int. Cl.: C02F 5/10

(54) **Water softening tablets**
Wasserenthärtende Tabletten
Comprimés pour adoucir l'eau

(30) Priority: 12.06.1996 DK 65596
(43) Date of publication of application: 17.12.1997
(73) Proprietor: CLEANTABS A/S, DK-8450 Hammel (DK)
(72) Inventor: Pedersen, Keld Winther, 8260 Viby J (DK)
(74) Representative: Zeuthen-Aagaard, Henrik

(56) References cited:
- EP-A- 0 504 091
- WO-A-87/02052

## Description

The present invention relates to water softening tablets and its use with conventional detergents for softening the washing water so as to avoid lime depositions on the heating elements of the washing machine and encrustations in the clothes.

Due to the calcium and magnesium content in common supply water it is necessary to use lime binders and/or precipitation inhibitors in detergents to prevent lime depositions in the laundry and in the washing machine as well as a reduction in the detergency of certain active ingredients.

When washing clothes in water with a high degree of hardness, ie with a high content of calcium and magnesium, it is necessary to use large amounts of lime binder and/or precipitation inhibitor and thus large amounts of detergent than when washing clothes in soft water. The use of such large dosages of detergent to obtain a larger amount of lime binder and/or precipitation inhibitor results in an excessively high dosage of active ingredients which is inappropriate both for financial and environmental reasons.

Consequently, in recent years a number of water softeners have been developed for use as a supplement to the detergents, ie typically when washing in hard water.

The products on the market today are typically based on polymer, zeolite, phosphate and/or citrate and often provided in liquid, powder or tablet form.

EP publication No 0 628 627 (Benckiser GmbH) discloses a water-soluble water softener in form of a tablet comprising A) 60-98% by weight of a combination of a) citrate and/or citric acid and b) a polymer with water softening effect in a weight ratio between a:b of from 70:30 to 50:50, preferably of from 65:35 to 55:45, B) of from 0.5 to 6% by weight of polyethylene glycol and C) of from 0 to 38% by weight of further adjuvants.

The water softening tablets known from EP publication No 0 628 627 are thus characterised by a special ratio between citrate and/or citric acid and polymer and by a comparatively high content of polymer, preferably of from 20 to 40% by weight, more preferred of from 30 to 36% by weight, confer claim 9 and Examples 1 to 9 in the publication.

The water softening tablets disclosed in the publication are reported to be easily soluble in the washing water and as having a good water softening effect. However, as stated above these tablets have a high content of polymer, which is considered environmentally undesirable.

Surprisingly, it has been found that when using a particular composition based on a polyfunctional carboxylic acid and/or a salt thereof, a carbonate and/or bicarbonate as well as a small amount of a polymer water softening tablets can be provided having a good water softening effect, a fast rate of dissolution in the washing water ensuring their performance while still being environmentally friendly and storage stable.

The present invention thus relates to water softening tablets characterised in that in addition to optional usual adjuvants and additives they comprise

| | |
|---|---|
| a polyfunctional carboxylic acid and/or a salt thereof calculated as trisodium citrate dihydrate | 10 to 70% by weight |
| a carbonate and/or bicarbonate | 15 to 45% by weight |
| a binder | 1 to 6% by weight |
| a polymer | 2 to 19% by weight |
| a layered silicate and/or alkali metal silicate | 0 to 45% by weight |
| a disintegrating agent | 2 to 15% by weight |
| a precipitation inhibitor | 0,5 to 5% by weight, |

and that the one tabler disintegrates in less than 45 seconds when submerged in 800 ml water at 20°C without stirring.

According to a preferred embodiment the water softening tablets comprise in addition to optional usual adjuvants and additives 15 to 45% by weight of a polyfunctional carboxylic acid and/or a salt thereof calculated as trisodium citrate dihydrate, 25 to 35% by weight of a carbonate and/or bicarbonate, 1 to 4% by weight of a binder, 5 to 15% by weight of a polymer, 25 to 35% by weight of a layered silicate and/or alkali metal silicate, 2 to 10% by weight of a disintegrating agent, and 0 to 5% by weight of a precipitation inhibitor.

According to another preferred embodiment the water softening tablets comprise in addition to optional usual adjuvants and additives 15 to 45% by weight of a polyfunctional carboxylic acid and/or a salt thereof calculated as trisodium citrate dihydrate, 25 to 35 % by weight of a carbonate and/or bicarbonate, 1 to 4% by weight of a binder, 5 to 15 % by weight of a polymer, 0 to 10% by weight of a layered silicate and/or alkali metal silicate, 2 to 10% by weight of a disintegrating agent, and 0 to 5% by weight of a precipitation inhibitor.

EP publication No. 0 504 091 discloses phosphate-free automatic dishwashing tablets comprising a polyfunctional carboxylic acid and/or a salt thereof, a carbonate and/or bicarbonate, a binder, a polymer and a layered silicate and/or sodium silicate. The known tablets further contains a chlorine-free, oxygen donating bleach. The incorporation of a bleaching agent in a tablet formulation will increase the tablet disintegration time far above 30 to 50 seconds generally required for water softening tablets to be used in laundry machines.

The extent of applicability of the invention appears from the following detailed description. It should, however, be understood that the detailed description and the specific examples are merely included to illustrate the preferred embodiments, and that various alterations and modifications within the scope of protection will be obvious to persons skilled in the art on the basis of the detailed description.

The water softening tablets according to the invention are primarily intended for use in common domestic washing machines together with conventional detergents when needed. The need for water softening tablets increases concurrently with the hardness of the supply washing water.

The water softening tablets according to the invention are advantageous in having a good water softening effect comparable with that of the water softening tablets known from EP publication No 0 628 627. This is surprising in that the present water softening tablets comprise a considerably smaller amount of polymer.

The water softening tablets according to the invention are further environmentally friendly, storage stable as well as easily soluble in the washing water.

The demand for water softening tablets which are easily dissolved in the washing water is further stiffened by the growing tendency of performing machine wash using a decreasing amount of water, lower temperatures and shorter washing cycles for environmental and financial reasons and in order to obtain consumer acceptance.

The water softening tablets according to the invention are based on a special composition of a polyfunctional carboxylic acid and/or a salt thereof, a carbonate and/or bicarbonate as well as a small amount of polymer and render in spite of the comparatively small amount of polymer surprisingly the same good water softening effect as for instance that of the water softening tablets known from EP publication No 0 628 627.

The used polyfunctional carboxylic acid and/or the salt thereof is included in an amount of from 10 to 70% by weight, preferably in an amount of from 10 to 59% by weight, most preferably in an amount of from 12 to 40% by weight, such as from 15 to 35% by weight, eg of from 18 to 26% by weight calculated as trisodium citrate dihydrate.

Polyfunctional carboxylic acids may as a general rule be defined as such acids which beyond the one obligatory carboxylic acid group also contain at least one further functional group selected from carboxyl and hydroxy. The polyfunctional carboxylic acids may furthermore also contain nitrogen. Non-limiting examples of such polyfunctional carboxylic acids are citric acid, malic acid, maleic acid, tartaric acid, nitrilotriacetic acid (NTA), ethylenediaminetetraacetic acid (EDTA) and isoserine diacetic acid (ISDA), of which citric acid is preferred. Citric acid is available in form of trisodium citrate dihydrate, anhydrous trisodium citrate as well as anhydrous monosodium citrate. Citric acid or trisodium citrate dihydrate is particularly preferable.

Carbonate and/or bicarbonate is included in an amount of from 15 to 45% by weight, preferably in an amount of from 20 to 40% by weight, such as of from 25 to 35% by weight. As cation in the carbonate and/or bicarbonate sodium or potassium is preferably used.

The carbonate and/or bicarbonate is included as builder and further improves the rate of dissolution of the water softening tablets. Thus the carbonate and/or the bicarbonate together with the polyfunctional carboxylic acid cause an effervescent effect when the water softening tablets come into contact with water.

Furthermore a binder forms part of the water softening tablets according to the invention. Such binders are quite conventional in the field of detergents. Examples of binders are polyethylene glycol, preferably of a molecular weight in the range of 200 - 10,000, glycerol, natural gums, for instance acacia and tragacanth, as well as sugars, such as glucose and saccharose. These compounds are described in greater detail in "Die Tablette" by Dr. W.A. Ritschel, published by Cantor KG/Aulendorf, Württ, Germany. The amount of binder is typically in the range of from 1 to 6% by weight, such as of from 1 to 5% by weight, for instance of from 1.5 to 3.5% by weight.

Moreover a polymer ingredient forms part of the water softening tablets according to the invention. Such polymers having a water softening effect are known substances and quite conventional in the field of detergents. Non-limiting examples of suitable polymers are polymerisates of acrylic acid, hydroxyacrylic acid, maleic acid, itaconic acid, mesaconic acid, acotinic acid, methylene malonic acid, citraconic acid as well as copolymerisates of the above carboxylic acids together or with other ethylenically unsaturated compounds, such as ethylene, propylene, isobutylene, vinyl alcohol, vinyl methylether, furane, acrolein, vinyl acetate, acrylamide, acrylonitrile, methacrylic acid and crotonic acid.

The molecular weight of the homo- and copolymers is usually in the range of about 1,000 to 1,000,000, preferably of 2,000 to 250,000 and most preferred of 5,000 to 100,000.

Particularly suitable polymers are maleic acidlacrylic acid copolymerisates and sodium salts thereof. Such copolymerisates are sold under the trademark SOKA-LAN® and an example hereof is the sodium salt of maleic acid/acrylic acid copolymer with a molecular weight of about 70,000 and sold by BASF AG, Ludwigshafen, Germany under the trademark SOKALAN® CP 5. Further examples are the Norasol® product sold by NorsoHaas S.A., Vemeuil-en-Halatte, France, such as Norasol WL 2B which is a co-granulate of about 30% of polyacrylate of a molecular weight of 4,500 and bicarbonate, as well as Norasol SP02N which is a neutralized copolymerisate of maleic acid and acrylic acid of a molecular weight of 70,000.

In addition to the above conventional biodegradable polymers, particular such on peptide basis should be mentioned. An example hereof is a polymer of aspartic acid sold by NorsoHaas S.A., Verneuil-en-Halatte, France.

The polymer ingredient is included in an amount of from 2 to 19% by weight, such as in an amount of from 3 to 15% by weight, for instance of from 5 to 12% by weight.

Layered silicate and/or alkali metal silicate may advantageously form part of the water softening tablets according to the invention and are typically used in an amount of up to 45% by weight, preferably in an amount of from 15 to 35% by weight, such as of from 20 to 33% by weight, but also smaller amounts such as of from 1 to 10% by weight are applicable. Layered silicate or a combination of layered silicate and a small amount of alkali metal silicate are preferably used.

Layered silicate has the stoichiometric composition Na₂SiO₅, wherein each layer comprises SiO₄-tetrahedrons. Layered silicate is a builder having a water softening as well as a soil-suspending effect. Layered silicate is advantageous in that it contrary to for instance aluminium silicate is able also to bind magnesium ions, which is particularly important at lime depositions on the heating elements of the washing machines. Due to its alkali reserve layered silicate contributes to the adjustment of the pH-value and is further completely dissolved when diluted with the discharge water such that it does not strain water purifying plants or is environmentally harmful. Further layered silicate possesses good tablet technical properties and contributes to the improvement of the stability of the tablets.

Thus, in the water softening tablets according to the invention for instance a layered silicate is used, e.g. supplied by Hoechst AG, Frankfurt am Main, Germany under the tradename "SKS-6".

An example of alkali metal silicate is sodium silicate, preferably sodium silicate of the composition Na₂O:SiO₂ in the ratio of 1:1 - 1:3.5, preferably 1:2 - 1:3.5. It is also possible to use mixtures of silicates having a varying content of alkali, such as for instance a mixture of Na₂O:SiO₂ = 1:2.5 and Na₂O:SiO₂ = 1:2.

An example of a commercial product is sodium disilicate with the composition Na₂O:SiO₂ = 1:2, which for instance is sold by Crossfield Chemie B.V., Eijsden, the Netherlands.

Moreover a disintegrating agent forms part of the water softening tablets according to the invention. Such disintegrating agents are completely conventional. Disintegrating agents swell at contact with water thereby accelerating the disintegration of the tablets. Examples of disintegrating agents are starch derivatives, cellulose compounds, polyvinylpyrrolidone compounds, polyvinylpolypyrrolidone compounds, bentonite compounds, alginates, gelatine and pectines as well as mixtures of polyvinylpyrrolidone and a cellulose compound. The amount of disintegrating agent used is typically in the range of from 2 to 15% by weight, such as of from 2 to 10% by weight, for instance of from 3 to 7% by weight.

Furthermore a complexing and precipitation inhibiting agent forms part of the water softening tablets according to the invention. Such an agent is quite conventional in the field of detergents. Examples of such agents are EDTA (ethylenediaminetetraacetic acid), DETPA (diethylenetriamine pentaacetic acid), HEEDTA (hydroxyethylethylenediaminetriacetic acid), ISDA (isoserine diacetic acid), methylglycine diacetic acid (which is sold by BASF AG, Germany) and phosphonates, i.e. phosphonic acids or salts thereof. An example of a phosphonate is Dequest 2016 D, which is tetrasodium-1-hydroxyethylene-(1,1-diphosphonate) with a content of active acid of about 60%, and which is sold by Monsanto S.A., Brussels, Belgium. Regarding a more detailed description of complexing agents, reference is made to DK-PS No 167.363.

The amount of precipitation inhibitor is typically in the range of from 0.5 to 5% by weight, such as of from 1 to 4% by weight, for instance of from 1.5. to 3.5 % by weight.

Other ingredients, which, if desired, may be included in the water softening tablets according to the invention, are further conventional tablet adjuvants, optical brighteners, bleaches, bleach activators, anti-lumping agents, colour transferring inhibitors, lubricating agents, anti-redeposition agents, agents making the textiles soil-repellent, enzymes, rinsing aids, colourants, deodorising agents, antioxidants and perfume.

The water softening tablets according to the invention are prepared in a completely conventional manner.

The invention is explained in detail in the following examples.

### Example 1

Water softening tablets according to the invention were prepared based on the compositions CL1 to CL8 stated in Table 1 below. The water softening tablet were compressed on a tabletting machine of the type KORSCH EK III. The tablets had a square cross section of 33 x 33 mm, a height of 14 to 16 mm and a weight of 20 g.

The disintegration period, the tablet strength, the water softening effect, the increase in volume after storage and the pH-value were measured for the prepared water softening tablets and are also stated in Table 1 below.

### Disintegration period:

The disintegration period was measured as the percentage residue after the tablet had been submerged into 800 ml of 20°C thermostat water for 45 seconds without being stirred. The same measurement was performed after four weeks of storage under accelerated aging conditions in an environmental chamber at 35°C and 75% RH.

### Tablet strength:

The tablet strength was measured as the centre pressure by way of a vertical downward penetration in the middle of the tablet at a rate of 50 mm/min by means of a flat 8 mm Ø steel piston on a Holland CT-tablet strength testing apparatus. The centre pressure stated in Table 1 below is the maximum pressure necessary for penetration of the tablet. The initial tablet strength, ie within 24 hours after preparation, as well as the tablet strength after a four-week storage under accelerating aging conditions in an environmental chamber at 35°C and 75% RH were measured.

The tablets were further measured for wear resistance by weighing five tablets and placing them in a container rotating by 25 rpm for five minutes, and subsequently re-weighing the tablets. The weight of the tablets after treatment is stated in percentage of the initial weight of the tablets. A high value thus indicates a high wear resistance.

### Water softening effect - encrustations test at CTTN-IREN:

The residue content of ash in percentage was determined by the independent institute of analysis CTTN-IREN INSTITUTE, Ecully Cedex, France by washing test swatches 25 times at 60°C and 22.5°dH. The test swatches were washed together with 3 kg of terry towels in a washing machine of the type BB40 Statomatic TX 555 de Brandt. 19 litres of water were used in the main wash and 15 litres were employed in each of the four rinse cycles. The main wash and the rinsing took one hour and 45 minutes in total. The encrustation value for washing without a softening tablet was measured to 4.79 at the test at CTTN-IREN.

In washes without water softening tablets 177 g of detergent with the tradename Maison Verte from Reckitt and Colman were used (corresponding to a 250 ml dosage for normally soiled laundry and a water hardness above 35°F = 19.6°dH). In washes with the water softening tablets according to the invention 131 g of powder detergent were used (corresponding to a 185 ml dosage for normally soiled laundry and a water hardness of 20-35°F = 11.2-19.6°dH).

### Increase in volume :

The percentage increase in volume of the water softening tablets was further measured by means of a Mitutoyo-slide gauge after storage under accelerated aging conditions in an environmental chamber at 35°C and 75% RH for four weeks. The percentage increase in volume of the water softening tablets should be as small as possible, because a small percentage increase in volume indicates a good storage stability.

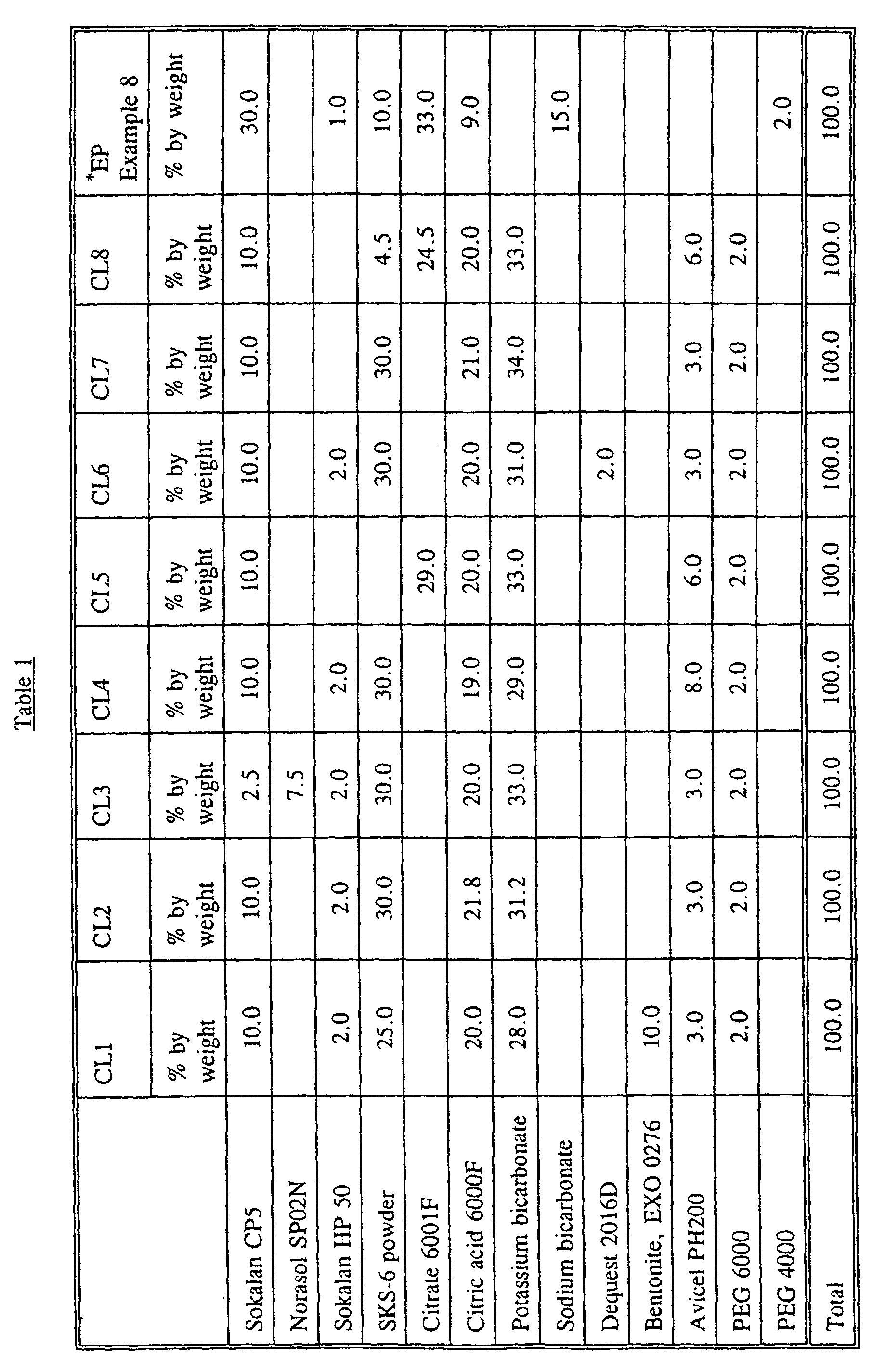

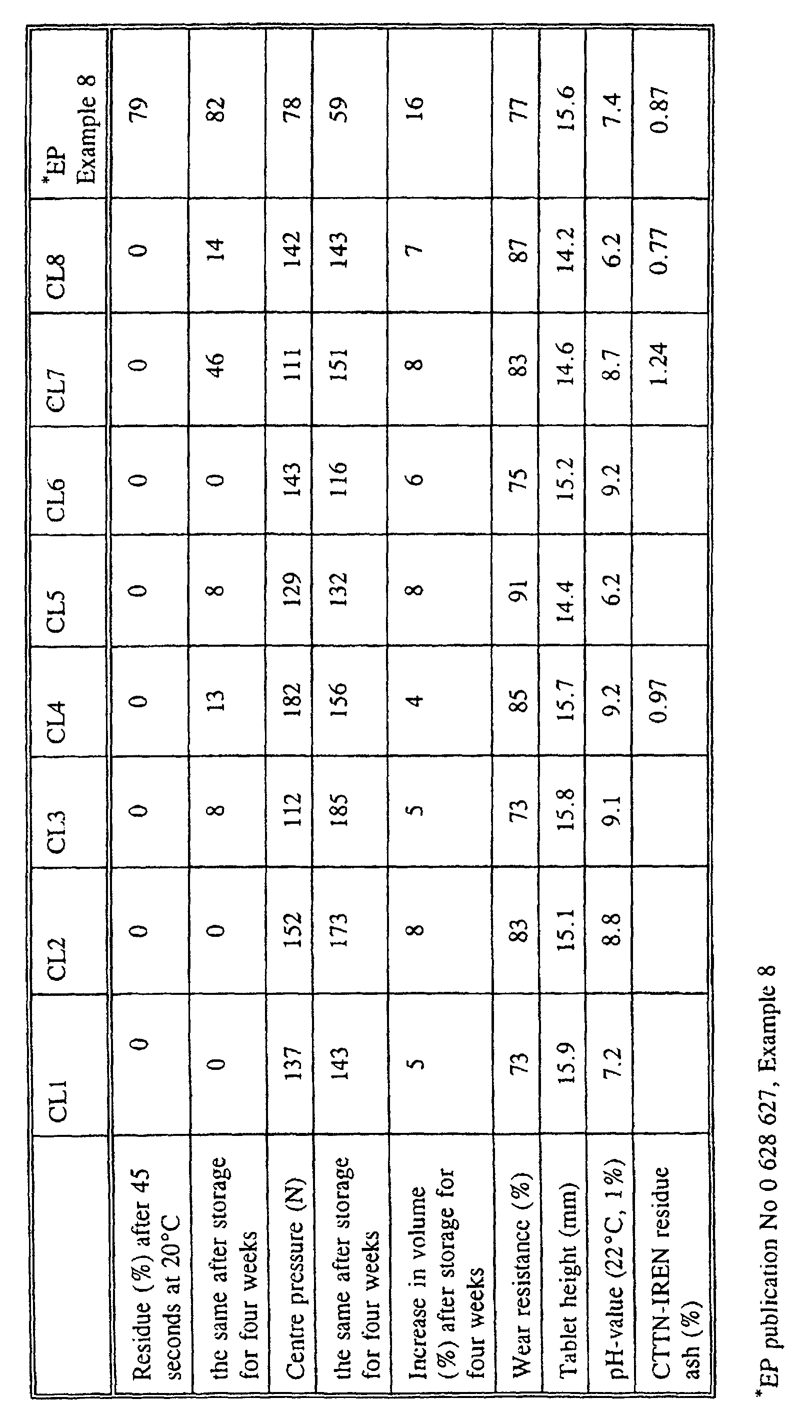

### Footnotes to Table 1

Sokalan CP5: Acrylic acid/maleic acid copolymerisate in form of the sodium salt of a molecular weight of about 70,000 sold by BASF AG, Ludwigshafen, Germany

Norasol SPO2N: Maleic acid/acrylic acid copolymerisate of a molecular weight of 70,000 sold by NorsoHaas S.A., Verneuil-en-Halatte, France.

Sokalan HP 50: Polyvinylpyrrolidone sold by BASF AG, Ludwigshafen, Germany.

SKS-6 powder: Layered silicate in powder form sold by Hoechst AG, Frankfurt am Main, Germany.

Citrate 6001F: Trisodium citrate dihydrate, fine granulate, sold by Jungbunzlauer AG, Vienna, Austria.

Citric acid 6000F: Citric acid, fine granulate, sold by Jungbunzlauer AG, Vienna, Austria.

Dequest 2016 D: Tetrasodium-1-hydroxyethylene-(1,1-diphosphonate), active acid content of about 60%, sold by Monsanto S.A, Brussels, Belgium.

Bentonite EXO 0276: Natural calcium/magnesium bentonite, sold by Sud Chemie AG, Munich, Germany.

Avicel PH200: Microcrystalline cellulose sold by FMC Corp., Philadelphia, USA.

PEG 6000: Polyethylene glycol of a molecular weight of 6000.

PEG 4000: Polyethylene glycol of a molecular weight of 4000.

As it appears from the test results, the water softening tablets according to the invention displays a water softening effect which is comparable with that of the water softening tablets known from EP publication No 0 628 627. It is further apparent that the present water softening tablets are more easily soluble and more storage stable than said known tablets.

The above description of the invention reveals that it is obvious that it can be varied in many ways. Such variations are not to be considered a deviation from the scope of the invention, and all such modifications which are obvious to persons skilled in the art are also to be considered comprised by the scope of the succeeding claims.

## Claims

1. Water softening tablets for use together with a conventional detergent for machine laundry washing , **characterised in that** in addition to optional usual adjuvants and additives they comprise
| | |
|---|---|
| a polyfunctional carboxylic acid and/or a salt thereof calculated as trisodium citrate dihydrate | 10 to 70% by weight |
| a carbonate and/or bicarbonate | 15 to 45% by weight |
| a binder | 1 to 6% by weight |
| a polymer | 2 to 19% by weight |
| a layered silicate and/or alkali metal silicate | 0 to 45% by weight |
| a disintegrating agent | 2 to 15% by weight |
| a precipitation inhibitor | 0 to 5% by weight, |
and that the one tablet disintegrates in less than 45 seconds when submerged in 800 ml water at 20°C without stirring.

2. Water softening tablets as claimed in claim 1, **characterised in that** they as polyfunctional carboxylic acid and/or salt thereof comprise citric acid, trisodium citrate dihydrate or a mixture thereof.

3. Water softening tablets as claimed in claim 1, **characterised in that** they as carbonate and/or bicarbonate comprise one or several ingredients selected from sodium carbonate, potassium carbonate, sodium bicarbonate and potassium bicarbonate.

4. Water softening tablets as claimed in claim 1, **characterised in that** they as binder comprise polyethylene glycol.

5. Water softening tablets as claimed in claim 1, **characterised in that** they as polymer comprise one or several ingredients selected from a maleic acid/ acrylic acid copolymerisate and a polymer of aspartic acid.

6. Water softening tablets as claimed in claim 1, **characterised in that** they as layered silicate and/or alkali metal silicate comprise layered silicate.

7. Water softening tablets as claimed in claim 1, **characterised in that** they as disintegrating agent comprise polyvinyl pyrrolidone, a cellulose compound or a mixture thereof.

8. Water softening tablets as claimed in claim 1, **characterised in that** they as precipitation inhibitor comprise one or several ingredients selected from a phosphonic acid, a phosphonic acid salt and methyl glycine diacetic acid.

9. Water softening tablets as claimed in claim 1, **characterised in that** in addition to optional usual adjuvants and additives they comprise
| | |
|---|---|
| a polyfunctional carboxylic acid and/or a salt thereof calculated as trisodium citrate dihydrate | 15 to 45% by weight |
| a carbonate and/or bicarbonate | 25 to 35% by weight |
| a binder | 1 to 4% by weight |
| a polymer | 5 to 15% by weight |
| a layered silicate and/or alkali metal silicate | 25 to 35% by weight |
| a disintegrating agent | 2 to 10% by weight |
| a precipitation inhibitor | 0 to 5% by weight. |

10. Water softening tablets as claimed in claim 1, **characterised in that** in addition to optional usual adjuvants and additives they comprise
| | |
|---|---|
| a polyfunctional carboxylic acid and/or a salt thereof calculated as trisodium citrate dihydrate | 15 to 45% by weight |
| a carbonate and/or bicarbonate | 25 to 35% by weight |
| a binder | 1 to 4% by weight |
| a polymer | 5 to 15 % by weight |
| a layered silicate and/or alkali metal silicate | 0 to 10% by weight |
| a disintegrating agent | 2 to 10% by weight |
| a precipitation inhibitor | 0 to 5 % by weight. |

11. Use of water softening tablets comprising in addition to optional usual adjuvants and additives
| | |
|---|---|
| a polyfunctional carboxylic acid and/or a salt thereof calculated as trisodium citrate dihydrate | 10 to 70% by weight |
| a carbonate and/or bicarbonate | 15 to 45% by weight |
| a binder | 1 to 6% by weight |
| a polymer | 2 to 19% by weight |
| a layered silicate and/or alkali metal silicate | 0 to 45 % by weight |
| a disintegrating agent | 2 to 15% by weight |
| a precipitation inhibitor | 0 to 5% by weight, |
of which one tablet disintegrates in less than 45 seconds when submerged in 800 ml water at 20°C without stirring, together with a separate conventional detergent for laundry washing.

## Patentansprüche

1. Wasserenthärtungstablette zur Verwendung zusammen mit einem konventionellen Detergens zum Waschmaschinenwaschen, **dadurch gekennzeichnet, dass** sie zusätzlich zu optionalen normalen Hilfsstoffen und Zusätzen
| | |
|---|---|
| eine polyfunktionelle Carbonsäure oder/und ein Salz davon, berechnet als Trinatriumcitrat-Dihydrat | 10 bis 70 Gew.-% |
| ein Carbonat oder/und Bicarbonat | 15 bis 45 Gew.-% |
| ein Bindemittel | 1 bis 6 Gew.% |
| ein Polymer | 2 bis 19 Gew.-% |
| ein Schichtsilikat oder/und Alkalimetallsilikat | 0 bis 45 Gew.-% |
| ein Aufschlussmittel | 2 bis 15 Gew.-% |
| einen Präzipitationshemmstoff | 0 bis 5 Gew.-% |
umfasst, und dass eine Tablette in weniger als 45 Sekunden zerfällt, wenn sie in 800 ml Wasser bei 20°C ohne Rühren eingetaucht wird.

2. Wasserenthärtungstablette nach Anspruch 1, **dadurch gekennzeichnet, dass** sie als polyfunktionelle Carbonsäure oder/und Salz davon Zitronensäure, Trinatriumcitrat-Dihydrat oder ein Gemisch davon umfasst.

3. Wasserenthärtungstablette nach Anspruch 1, **dadurch gekennzeichnet, dass** sie als Carbonat oder/und Bicarbonat einen oder mehrere Bestandteile, ausgewählt aus Natriumcarbonat, Kaliumcarbonat, Natriumbicarbonat und Kaliumbicarbonat umfasst.

4. Wasserenthärtungstablette nach Anspruch 1, **dadurch gekennzeichnet, dass** sie als Bindemittel Polyethylenglycol umfasst.

5. Wasserenthärtungstablette nach Anspruch 1, **dadurch gekennzeichnet, dass** sie als Polymer einen oder mehrere Bestandteile umfasst, ausgewählt aus Maleinsäure/Acrylsäure-Copolymerisat und einem Polymer aus Asparaginsäure.

6. Wasserenthärtungstablette nach Anspruch 1, **dadurch gekennzeichnet, dass** sie als Schichtsilikat oder/und Alkalimetallsilikat Schichtsilikat umfasst.

7. Wasserenthärtungstablette nach Anspruch 1, **dadurch gekennzeichnet, dass** sie als Aufschlussmittel Polyvinylpyrrolidon, eine Celluloseverbindung oder ein Gemisch daraus umfasst.

8. Wasserenthärtungstablette nach Anspruch 1, **dadurch gekennzeichnet, dass** sie als Präzipitationshemmstoff einen oder mehrere Bestandteile, ausgewählt aus Phosphonsäure, einem Phosphonsäuresalz und Methylglycindiessigsäure umfasst.

9. Wasserenthärtungstablette nach Anspruch 1, **dadurch gekennzeichnet, dass** sie zusätzlich zu optionalen normalen Hilfsstoffen und Zusätzen
| | |
|---|---|
| eine polyfunktionelle Carbonsäure oder/und ein Salz davon, berechnet als Trinatriumcitrat-Dihydrat | 15 bis 45 Gew.-% |
| ein Carbonat oder/und Bicarbonat | 25 bis 35 Gew.-% |
| ein Bindemittel | 1 bis 4 Gew.% |
| ein Polymer | 5 bis 15 Gew.-% |
| ein Schichtsilikat oder/und Alkalimetallsilikat | 25 bis 35 Gew.-% |
| ein Aufschlussmittel | 2 bis 10 Gew.-% |
| einen Präzipitationshemmstoff umfasst. | 0 bis 5 Gew.-% |

10. Wasserenthärtungstablette nach Anspruch 1, **dadurch gekennzeichnet, dass** sie zusätzlich zu optionalen normalen Hilfsstoffen und Zusätzen
| | |
|---|---|
| eine polyfunktionelle Carbonsäure oder/und ein Salz davon, berechnet als Trinatriumcitrat-Dihydrat | 15 bis 45 Gew.-% |
| ein Carbonat oder/und Bicarbonat | 25 bis 35 Gew.-% |
| ein Bindemittel | 1 bis 4 Gew.% |
| ein Polymer | 5 bis 15 Gew.-% |
| ein Schichtsilikat oder/und Alkalimetallsilikat | 0 bis 10 Gew.-% |
| ein Aufschlussmittel | 2 bis 10 Gew.-% |
| einen Präzipitationshemmstoff umfasst. | 0 bis 5 Gew.-% |

11. Verwendung einer Wasserenthärtungstablette, umfassend zusammen mit optionalen normalen Hilfsstoffen und Zusätzen
| | |
|---|---|
| eine polyfunktionelle Carbonsäure oder/und ein Salz davon, berechnet als Trinatriumcitrat-Dihydrat | 10 bis 70 Gew.-% |
| ein Carbonat oder/und Bicarbonat | 15 bis 45 Gew.-% |
| ein Bindemittel | 1 bis 6 Gew.% |
| ein Polymer | 2 bis 19 Gew.-% |
| ein Schichtsilikat oder/und Alkalimetallsilikat | 0 bis 45 Gew.-% |
| ein Aufschlussmittel | 2 bis 15 Gew.-% |
| einen Präzipitationshemmstoff | 0 bis 5 Gew.-% |
wobei eine Tablette in weniger als 45 Sekunden zerfällt, wenn sie in 800 ml Wasser bei 20°C ohne Rühren eingetaucht wird, zusammen mit einem separaten konventionellen Waschmittel zum Wäschewaschen.

## Revendications

1. Comprimés adoucissants pour l'eau destinés à être employés ensemble avec un détergent classique pour lavage de linge à blanchir en machine, **caractérisé en ce qu'**en plus d'adjuvants et d'additifs habituels facultatifs, ils comprennent :
| | |
|---|---|
| un acide carboxylique polyfonctionnel et/ou un sel de celui-ci à raison de d'après calcul pour le citrate de trisodium dihydraté | 10 à 70 % en poids |
| un carbonate et/ou un bicarbonate à raison de | 15 à 45 % en poids |
| un agent de liaison à raison de | 1 à 6 % en poids |
| un polymère à raison de un silicate stratifié et/ou un silicate de métal alcalin à raison de | 2 à 19 % en poids 0 à 45 % en poids |
| un agent de désintégration à raison de | 2 à 15 % en poids |
| un inhibiteur de précipitation à raison de | 0,5 à 5 % en poids |
et **en ce qu'**un comprimé se désintègre en moins de 45 s lorsqu'il est immergé dans 800 ml d'eau à 20 °C sans agiter.

2. Comprimés adoucissants pour l'eau tels que revendiqués dans la revendication 1, **caractérisés en ce qu'**ils comprennent en tant qu'acide carboxylique polyfonctionnel et/ou sel de celui-ci, de l'acide citrique, du citrate de trisodium dihydraté ou un mélange de ceux-ci.

3. Comprimés adoucissants pour l'eau selon la revendication 1, **caractérisés en ce qu'**ils comprennent en tant que carbonate et/ou bicarbonate, un ou plusieurs ingrédients choisis parmi le carbonate de. sodium, le carbonate de potassium, le bicarbonate de sodium et le bicarbonate de potassium.

4. Comprimés adoucissants pour l'eau selon la revendication 1, **caractérisés en ce qu'**ils comprennent, en tant qu'agent de liaison, du polyéthylène glycol.

5. Comprimés adoucissants pour l'eau selon la revendication 1, **caractérisés en ce qu'**ils comprennent, comme polymère, un ou plusieurs ingrédients choisis parmi un copolymérisat d'acide maléique et d'acide acrylique, et un polymère d'acide aspartique.

6. Comprimés adoucissants pour l'eau selon la revendication 1, **caractérisés en ce qu'**ils comprennent en tant que silicate stratifié et/ou silicate de métal alcalin, un silicate stratifié.

7. Comprimés adoucissants pour l'eau selon la revendication 1, **caractérisés en ce qu'**ils comprennent, en tant qu'agent de désintégration, de la polyvinylpyrrolidone, un composé cellulosique ou un mélange de ceux-ci.

8. Comprimés adoucissants pour l'eau selon la revendication 1, **caractérisés en ce qu'**ils comprennent, en tant qu'inhibiteurs de précipitation, un ou plusieurs ingrédients choisis parmi un acide phosphonique, un sel d'acide phosphonique et l'acide méthylglycinediacétique.

9. Comprimés adoucissants pour l'eau selon la revendication 1, **caractérisés en ce qu'**en plus d'adjuvants et d'additifs facultatifs habituels, ils comprennent :
| | |
|---|---|
| un acide carboxylique polyfonctionnel et/ou un sel de celui-ci à raison de | 15 à 45 % en poids |
| d'après calcul pour le citrate de trisodium dihydraté | |
| un carbonate et/ou un bicarbonate à raison de | 25 à 35 % en poids |
| un agent de liaison à raison de | 1 à 4 % en poids |
| un polymère à raison de | 5 à 15 % en poids |
| un silicate stratifié et/ou un silicate de métal alcalin à raison de | 25 à 35 % en poids |
| un agent de désintégration à raison de | 2 à 10 % en poids |
| un inhibiteur de précipitation à raison de | 0 à 5 % en poids |

10. Comprimés adoucissants pour l'eau selon la revendication 1, **caractérisés en ce qu'**en plus d'adjuvants et d'additifs habituels facultatifs, ils comprennent :
| | |
|---|---|
| un acide carboxylique polyfonctionnel et/ou un sel de celui-ci à raison de | 15 à 45 % en poids |
| d'après calcul pour le citrate de trisodium dihydraté un carbonate et/ou un bicarbonate à raison de | 25 à 35 % en poids |
| un agent de liaison à raison de | 1 à 4 % en poids |
| un polymère à raison de un silicate stratifié et/ou un silicate de métal alcalin à raison | 5 à 15 % en poids |
| de | 0 à 10 % en poids |
| un agent de désintégration à raison de | 2 à 10 % en poids |
| un inhibiteur de précipitation à raison de | 0 à 5 % en poids |

11. Utilisation de comprimés adoucissants pour l'eau comprenant en plus d'adjuvants et d'additifs facultatifs habituels :
| | |
|---|---|
| un acide carboxylique polyfonctionnel et/ou un sel de celui-ci à raison de | 10 à 70 % en poids |
| d'après calcul pour le citrate de trisodium dihydraté un carbonate et/ou un bicarbonate | |
| à raison de | 15 à 45 % en poids |
| un agent de liaison à raison de | 1 à 6 % en poids |
| un polymère à raison de | 2 à 19 % en poids |
| un silicate stratifié et/ou un silicate de métal alcalin à raison de | 0 à 45 % en poids |
| un agent de désintégration à raison de | 2 à 15 % en poids |
| un inhibiteur de précipitation à raison de | 0 à 5 % en poids |
l'un de ces comprimés se désintègrant en moins de 45 s lorsqu'il est immergé dans 800 ml d'eau à 20 °C sans agiter, ensemble avec un détergent classique séparé pour lavage de linge à blanchir.
